Europäisches Patentamt

European Patent Office

Office européen des brevets

(19)

(11)  **EP 1 316 220 B1**

(12)  **FASCICULE DE BREVET EUROPEEN**

(45)  Date de publication et mention
      de la délivrance du brevet:
      **22.12.2004   Bulletin 2004/52**

(21)  Numéro de dépôt: **01967412.6**

(22)  Date de dépôt: **31.08.2001**

(51)  Int Cl.$^7$: **H04N 7/26**

(86)  Numéro de dépôt international:
      **PCT/FR2001/002719**

(87)  Numéro de publication internationale:
      **WO 2002/021848 (14.03.2002 Gazette 2002/11)**

(54)  **PROCEDE DE COMPRESSION/DECOMPRESSION DE DOCUMENTS STRUCTURES**

**VORRICHTUNG ZUR KODIERUNG UND DEKODIERUNG VON STRUKTURIERTEN DOKUMENTEN**

**METHOD FOR COMPRESSING/DECOMPRESSING STRUCTURED DOCUMENTS**

(84)  Etats contractants désignés:
      **AT BE CH CY DE DK ES FI FR GB GR IE IT LI LU MC NL PT SE TR**

(30)  Priorité:  **06.09.2000  FR 0011356**

(43)  Date de publication de la demande:
      **04.06.2003   Bulletin 2003/23**

(73)  Titulaire: **Expway**
      **51100 Reims (FR)**

(72)  Inventeurs:
      • **THIENOT, Cédric**
        **F-75011 Paris (FR)**
      • **SEYRAT, Claude**
        **F-75001 Paris (FR)**

(74)  Mandataire: **de Roquemaurel, Bruno et al
      Novagraaf Technologies
      122, rue Edouard Vaillant
      92593 Levallois Perret Cedex (FR)**

(56)  Documents cités:
      **EP-A- 0 650 130            WO-A-97/34240**

      • **LIEFKE H ; SUCIU D : "XMill: an efficient
        compressor for XML data" 2000 ACM SIGMOD.
        INTERNATIONAL CONFERENCE ON
        MANAGEMENT OF DATA, vol. 29, no. 2, 16 - 18
        mai 2000, pages 153-164, XP002168802 Dallas,
        TX, USA**
      • **ANONYMOUS: "Technique to Generate very
        Efficient Compression/Decompression Engines
        for XML Data Streams Based on the Stream's
        DTD" IBM RESEARCH DISCLOSURE, no. 430, 1
        février 2000 (2000-02-01), page 399 XP002168803
        Havant, UK, article No. 430188**

**Description**

La présente invention concerne un procédé de compression / décompression de documents structurés.

Elle s'applique notamment, mais non exclusivement, à la transmission de documents tels que des images ou séquences d'images, des données vidéo ou sonores, par des réseaux de transmission de données numériques, ainsi qu'au stockage de tels documents.

A l'heure actuelle, il existe plusieurs algorithmes de compression de document numérique. Certains algorithmes de compression sont conçus pour traiter directement les données binaires du document, sans tenir compte du type de ces données. Ces algorithmes présentent l'avantage de pouvoir traiter n'importe quel document, mais sont peu performants (taux de compression peu élevé) pour traiter des documents volumineux qui sont généralement de type son ou image.

On connaît par ailleurs d'autres algorithmes de compression plus efficaces, mais spécialement adaptés à un type de données, par exemple de type image ou son, de sorte qu'ils ne sont pas utilisables, ou performants s'ils sont appliqués à des documents ne contenant pas exclusivement des données pour lesquelles ils sont conçus.

Or de plus en plus, les documents utilisés et circulant sur les réseaux de transmission de données contiennent plusieurs types d'informations intégrées dans une structure.

Un document structuré est une collection d'ensembles d'informations associés chacun à un type, et composés entre eux selon des relations principalement hiérarchiques. Ces documents emploient un langage de structuration tel que SGML, HTML, XML, permettant notamment de distinguer les différents ensembles d'informations composant le document. Par opposition, dans un document dit linéaire, les informations de contenu du document sont mélangées aux informations de présentation et de typage.

Ainsi, un document structuré inclut des repères de séparation des différents ensembles d'informations du document. Dans le cas des formats SGML, XML ou HTML, ces repères appelés "balises" sont de la forme "<XXXX>" et "</XXXX>", le premier repère indiquant le début de l'ensemble d'informations "XXXX" et le second la fin de cet ensemble. Un ensemble d'informations peut être composé de plusieurs ensembles d'informations de plus bas niveau. Ainsi, un document structuré présente un schéma de structure hiérarchique ou arborescente, chaque noeud représentant un ensemble d'informations et étant relié à un noeud de niveau hiérarchique supérieur représentant un ensemble d'informations qui contient les ensembles d'informations de niveau inférieur. Les noeuds situés en bout de branche de cette structure arborescente représentent des ensembles d'informations contenant des données d'un type prédéfini, qui ne peuvent pas être décomposées en sous-ensembles d'informations.

Un document structuré est généralement associé à ce qu'on appelle un schéma de structure définissant sous la forme de règles la structure et le type d'information de chaque ensemble d'informations du document. Un schéma est constitué de groupes imbriqués de structures d'ensembles d'informations, ces groupes pouvant être des séquences ordonnées, des groupes d'éléments alternatifs ou des groupes d'éléments nécessaires, ordonnés ou non ordonnés.

Ainsi, un document structuré est associé à un schéma de structure et contient des repères de séparation représentés sous la forme de données textuelles ou binaires, ces repères délimitant des ensembles d'informations pouvant eux-mêmes contenir d'autres ensembles d'informations délimités par les repères. Il en résulte qu'un document ainsi structuré peut comprendre non seulement des données textuelles, mais également tout autre type d'information (par exemple des données sonores, des images, etc.). Par conséquent les algorithmes de compression spécifiques d'un type de données particulier sont peu efficaces et mal adaptés pour traiter ce type de documents.

La présente invention a pour but de supprimer ces inconvénients. A cet effet, elle propose un procédé pour la compression et décompression d'un document structuré, associé à au moins un schéma de structure arborescent définissant une structure du document et comprenant des éléments de structure imbriqués représentant des ensembles d'informations, les éléments de structure étant répartis en trois catégories, à savoir des éléments racine structurés décomposés en groupes d'éléments et en éléments de base structurés, ou non structurés correspondant aux éléments de plus bas niveau dans la structure, chaque élément de base et élément racine étant associé à un type d'information.

Selon l'invention, ce procédé est caractérisé en ce qu'au moins un type d'information des éléments de base est associé au préalable à un algorithme de compression adapté, le procédé comprenant les étapes suivantes :

- l'analyse syntaxique du schéma de structure du document,

- la compilation du schéma de structure en vue d'obtenir un automate à états finis par élément racine, chaque automate comprenant des états reliés entre eux par des transitions représentant respectivement les éléments de la structure, et

- la compression du document structuré comprenant l'exécution des automates à états finis sur le document, et l'exécution de l'algorithme de compression lorsqu'un ensemble d'informations ayant un type d'information associé audit algorithme est rencontré dans le document à compresser.

Grâce à la compilation du schéma de structure, la structure du document est représentée d'une manière très compacte, et du fait que chaque ensemble d'informations correspondant à un élément de structure de base est associé à un type d'information, il peut être traité par l'algorithme de compression le mieux adapté à son type. De cette manière, si le document contient par exemple des données textuelles, des images, et des données sonores, ces données sont parfaitement repérées dans le document structuré, et associées à un élément de structure de bas niveau et un type. Au cours de l'exécution des automates, ceux-ci vont détecter la présence d'ensembles d'informations ayant un type de base associé à un algorithme de compression et appeler successivement les algorithmes correspondants sur ces données pour obtenir des séquences d'informations binaires correspondantes qui sont insérées au fur et à mesure dans le document résultant de la compression.

En outre, dans le cas d'une transmission de données, si les documents transmis présentent toujours le même schéma de structure, il n'est pas nécessaire de transmettre celui-ci à chaque transmission de document, d'où un gain supplémentaire au niveau du taux de compression obtenu grâce au procédé selon l'invention. Cette transmission est même inutile lorsque le schéma est préalablement connu du destinataire du document. Par exemple s'il s'agit d'un document HTML, il n'est jamais besoin, même la première fois de coder le schéma du document.

Par automate à états finis, il faut comprendre un ensemble d'états, chaque état étant associé à un ensemble d'événements d'entrée et une fonction de transition qui détermine pour chaque événement d'entrée l'ensemble des états actifs de l'automate. Compte tenu de cette définition, on peut imaginer de nombreuses représentations, par exemple faisant intervenir des tables de transcodage, à raison d'une table par état indiquant pour chaque événement d'entrée, la table correspondant à l'état suivant, ou encore des tables de correspondances, à raison d'une table par automate ayant autant de lignes et de colonnes qu'il y a d'états dans l'automate, chaque case de la table contenant la description de la transition entre les deux états correspondants.

A la décompression, le schéma de structure est traité de la même façon pour déterminer les automates ayant servi à la compression et analyser le contenu du document compressé en vue de reconstituer un document au format d'origine ayant une structure au moins équivalente, sinon identique, des algorithmes de décompression correspondant aux algorithmes de compression utilisés lors de la compression étant exécutés pour restituer les ensembles d'informations d'origine à partir des séquences d'informations binaires repérées dans le document compressé.

Dans le cas où le schéma de structure doit être transmis avec le document, le procédé selon l'invention comprend avantageusement une étape de transmission du schéma de structure qui peut être celui d'origine, celui obtenu après transformation et normalisation, ou encore celui obtenu après compilation.

Selon une particularité de l'invention, chaque ensemble d'information est repéré dans le document compressé de manière à permettre un accès direct à un élément d'information particulier, sans qu'il soit nécessaire de décompresser tout le document, ni les ensembles d'informations précédant l'ensemble à décompresser.

Selon une autre particularité de l'invention, chaque élément du schéma de structure est en outre associé à un ensemble de nombres d'occurrences possibles, indiquant le nombre de fois qu'un ensemble d'informations ayant cet élément de structure peut apparaître dans l'ensemble d'informations de niveau immédiatement supérieur auquel il appartient.

Le procédé selon l'invention peut comprendre une étape d'optimisation du schéma de structure du document consistant à réduire le nombre de niveaux hiérarchiques de groupes d'éléments de structure. Cette optimisation permet de simplifier le schéma de structure, mais rend le traitement de compression mois efficace.

Un mode de mise en oeuvre du procédé selon l'invention sera décrit ci-après, à titre d'exemple non limitatif, avec référence aux dessins annexés dans lesquels :

La figure 1 représente sous la forme d'un schéma-bloc l'enchaînement des différentes étapes du procédé selon l'invention ;

Les figures 2a, 2b et 2c représentent graphiquement un schéma de structure sous la forme d'un arbre ;

La figure 3 montre un schéma de structure obtenu en appliquant une méthode de réduction selon l'invention au schéma de structure représenté sur la figure 2 ;

Les figures 4a, 4b et 4c montrent un schéma de structure obtenu en appliquant une autre méthode de réduction selon l'invention au schéma de structure représenté sur la figure 2 ;

Les figures 5a à 5c représentent respectivement trois automates à états finis obtenus et utilisés par le procédé selon l'invention ;

La figure 6 représente un autre automate illustrant une méthode d'optimisation utilisée par le procédé selon l'invention ;

Les figures 7a et7b représentent deux automates obtenus à l'aide du procédé selon l'invention à partir d'un schéma de structure particulier ; et

La figure 8 illustre l'application d'une méthode de réduction aux automates représentés sur les figures 7a et 7b.

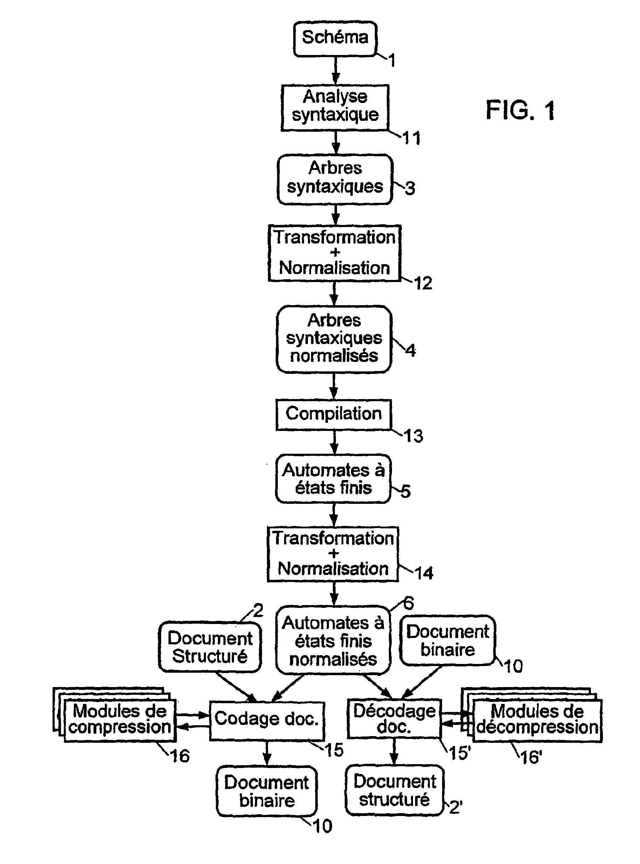

La figure 1 représente l'enchaînement des différentes étapes du procédé selon l'invention.

Ce procédé est conçu pour traiter un document structuré constitué d'un schéma de structure 1 définissant la structure du document et des informations structurées 2 du document.

Dans le langage XNIL Schema, un schéma de structure présente par exemple la forme suivante :

```
<element name="C">
  <complexType>
    <attribute name="a2" required=false type="boolean"/>
    <attribute name="a1" required=true type="integer"/>
    <Group order=choice>
      <element name="A" type="TA" minOccurs=1 maxOccurs=1/>
      <element name="B" type="TB" minOccurs=1 maxOccurs=1/>
    </Group>
  </complexType>
</element>
```

Ce schéma indique que l'élément nommé "C" présente une structure complexe constituée d'un premier élément nommé "a2" de type booléen qui est optionnel, d'un second élément nommé "a1" de type entier qui est toujours présent dans la structure, et d'un groupe d'éléments alternatifs nommés "A" et "B" de types respectifs "TA" et "TB", l'un des ces deux éléments étant présent une seule fois dans la structure.

Les types "TA" et "TB" sont définis dans le schéma de structure du document par une formulation analogue.

D'une manière générale, on utilise les groupes d'éléments suivants pour définir une structure de document :

- SEQ : qui définit une liste d'éléments ordonnés qui doivent tous apparaître dans le document et dans l'ordre indiqué,
- CHO : qui définit un ensemble d'éléments alternatifs, un seul élément du groupe devant apparaître,
- ET : qui définit un ensemble d'éléments qui doivent tous apparaître dans le document et dans un ordre quelconque qui ne doit pas être modifié,
- $ET_{NO}$ : qui définit un ensemble d'éléments qui doivent tous être présents dans le document dans un ordre quelconque qui n'a pas d'importance, et
- ANY : qui comprend un élément quelconque parmi tous les éléments possibles que l'on peut trouver dans le document.

Selon l'invention, cette formulation est analysée et transformée à l'étape 11 du procédé pour obtenir des arbres syntaxiques 4, à raison d'un arbre par élément de structure. L'arbre syntaxique correspondant à l'élément de structure TC est symbolisé par la formule suivante :

$$TC \rightarrow ((a1^{1..1}_{\{int\}} \ \&_{no} \ a2^{0..1}_{\{bool\}})^{1..1}, (A^{1..1}_{\{TA\}} \mid B^{1..1}_{\{TB\}})^{1..1})^{1..1} \tag{1}$$

dans laquelle :

"$\rightarrow$" indique que TC est le nom donné à la structure définie après ce symbole,

"( )" indique les priorités avec lesquelles les groupes d'éléments doivent être lus,

"," correspond à un groupe d'éléments de type séquence (SEQ),

"|" représente un groupe d'éléments alternatifs (CHO)

"&" représente un groupe d'éléments de type ET,

"$\&_{no}$" représente un groupe d'éléments de type ET non ordonné,

"{}" associe à un élément un nom d'élément de structure ou bien un type de base (par exemple entier ou booléen), et

"A$^{x..y}$" indique que l'élément A est répété de x à y fois dans le document, y pouvant être égal à "*" représentant une valeur indéterminée.

Cette formulation utilise également le symbole $" qui représente n'importe quel élément (ANY).

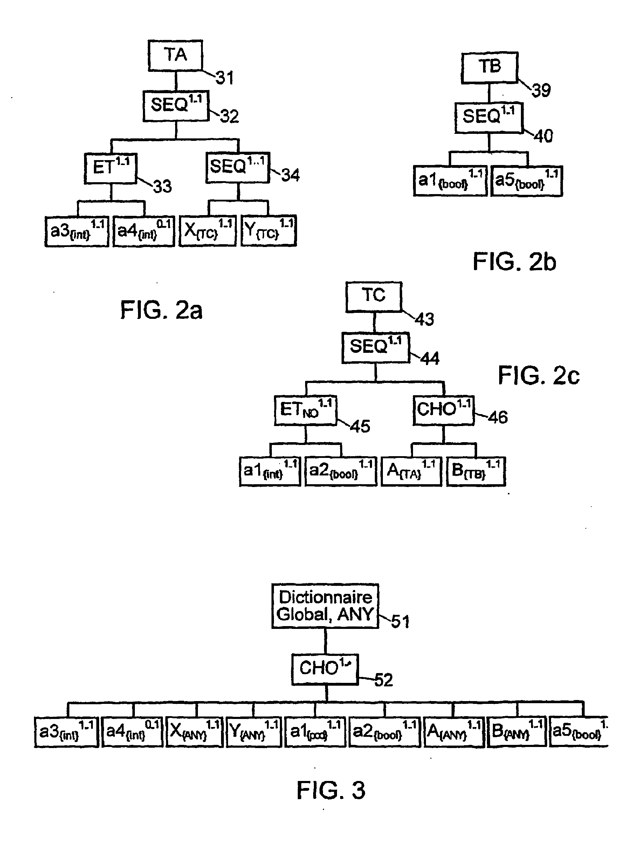

La formule (1) peut être représentée par l'arbre représenté sur la figure 2c, cet arbre comprenant un élément racine "TC" 43 constitué d'une occurrence unique d'un groupe de type séquence 44. Ce groupe comprend une occurrence unique d'un groupe de type "ET" non ordonné 45 et une occurrence unique d'un groupe alternatif 46,
Le groupe 45 étant constitué d'une occurrence unique d'un entier nommé "a1" et d'un booléen nommé "a2", et le groupe 46 comprenant une occurrence unique d'un élément nommé "A" de type "TA" et d'un élément "B" de type "TB".

Les types "TA" et "TB" obtenus à l'étape 11 sont par exemple donnés par les formules suivantes :

$$TA \rightarrow ((a3_{\{int\}}^{1-1} \& a4_{\{int\}}^{0..1})^{1..1}, (X_{\{TC\}}^{1..1}, Y_{\{TC\}}^{1..1})^{1..1})^{1..1} \qquad (2)$$

$$TB \rightarrow (a1_{\{bool\}}^{1..1}, a5_{\{bool\}}^{0..1})^{1..1} \qquad (3)$$

et représentés par les arbres montrés respectivement sur les figures 2a et 2b.
Le type "TA" 31 comprend un groupe unique 32 de type séquence constitué de deux groupes uniques 33, 34, respectivement de type ET et SEQ. Le groupe 33 comprend deux occurrences uniques de type entier, nommées respectivement "a3" et "a4". Le groupe 34 comprend deux occurrences uniques de type "TC" nommées respectivement "X" et "Y". Le type "TB" 39 est constitué d'un groupe unique 40 de type séquence comprenant deux booléens respectivement nommés "a1" et "a5".

Bien que dans la description qui précède, on a distingué le nom de chaque élément et son type, le procédé selon l'invention s'applique également aux langages de structuration qui ne font pas cette distinction.

Par ailleurs, les éléments de structure doivent être déterministes, c'est-à-dire qu'un élément ne doit pas pouvoir être interprété de plusieurs manières différentes. Par exemple, dans le schéma "(a | (a., b))", dans le cas où "a" apparaît, on ne sait pas si "b" doit apparaître ensuite. Il existe à cet effet des algorithmes qui peuvent être appliqués par le procédé selon l'invention pour transformer un schéma non déterministe en un schéma déterministe. On peut par exemple se référer aux documents ["Regular expressions into finite automata" Brûggemann-Klein, Anne, Extended Abstract in I. Simon, Hrsg., LATIN 1992, S. 97-98. Springer-Verlag, Berlin 1992. Full Version in Theoretical Computer Science 120: 197-213, 1993]. Ainsi, le schéma ci-avant peut par exemple être remplacé par "(a, b$^{0..1}$)".

A l'étape 12 suivante du procédé selon l'invention, les éléments du schéma de structure transformés en arbres syntaxiques peuvent tout d'abord subir un traitement de réduction ou de simplification.

Ce traitement de réduction consiste à effectuer un aplatissement global en générant un seul arbre syntaxique 51 à partir de tous les arbres 31, 39 et 43, comme cela est représenté sur la figure 3.

Cet arbre représente en fait un dictionnaire de tous les types d'éléments susceptibles d'être rencontrés dans le document, ces éléments étant rassemblés dans un groupe 52 de type alternatif apparaissant au moins une fois (1..*) dans le document. Dans cet arbre, les éléments de type complexe "A", "B", "X" et "Y" sont associés à un type "ANY", et l'élément "a1" qui apparaissait deux fois (dans les éléments "TB" et "TC") avec des types différents, est associé à un type par défaut "pcdata" selon le langage XML ou au type de l'élément dans le document initial, par exemple texte. Un même ensemble d'informations peut en effet être représenté de plusieurs manières : par exemple une séquence binaire peut également être considérée comme une chaîne de caractères ou un nombre entier.

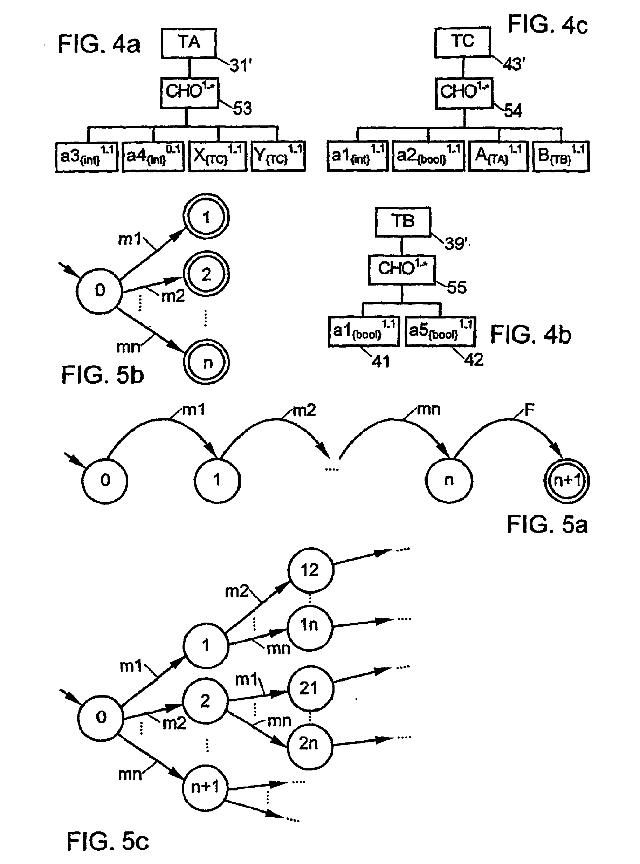

Alternativement, ce traitement de réduction consiste à aplatir localement les arbres syntaxiques pour obtenir les arbres représentés 31', 39' et 43' sur les figures 4a à 4c.

Dans chacune de ces figures, les groupes 32 à 34 (figure 2a), 40 (figure 2b) et 44 à 46 (figure 2c) ont été respectivement remplacés par un groupe 53, 55, 54 de type alternative apparaissant au moins une fois (1..*).

Les arbres "TA", "TB" et "TC" peuvent en outre subir un traitement supplémentaire pour supprimer les ambiguïtés apparaissant dans le schéma de structure.

A l'étape 12, les arbres "TA", "TB" et "TC" subissent également un traitement de normalisation qui consiste à réordonner le schéma de manière à obtenir un ordre unique des éléments du schéma. Ce traitement affecte un numéro binaire aux différents noeuds des arbres syntaxiques obtenus à la suite des traitements précédents. Ce numéro est utilisé lors de la compression de l'élément correspondant.

Ce traitement de normalisation consiste à attribuer à chaque groupe une signature constituée de la concaténation du nom du groupe avec la signature de tous les éléments et des sous-groupes du groupe, préalablement ordonnés. Ainsi, le groupe 53 sur la figure 4 est associé à la signature "CHO.a3.a4.X.Y" (ou "|a3.a4.X.Y").

Pour ce traitement de normalisation, on considère que les groupes ordonnés (SEQ) sont déjà normalisés.

Les groupes à normaliser sont donc les groupes de type alternatif ("CHO"), et les groupes "ET" et "ET$_{NO}$". Ce traitement comprend les étapes suivantes pour chaque groupe G composé de sous-groupes $g_i$ et d'éléments $e_i$ :

- la normalisation des sous-groupes $g_i$ éventuels du groupe G avant de normaliser le groupe G, l'algorithme de normalisation étant récursif,
- le rangement des éléments $e_i$ éventuels du groupe G avant les sous-groupes $g_i$,
- le rangement des éléments $e_i$ dans un ordre prédéfini,
- le rangement des sous-groupes $g_i$ dans l'ordre prédéfini, et
- la détermination de la signature du groupe G donnée par la concaténation de toutes les signatures de ses composants (éléments et sous-groupes) suivant l'ordre établi à la suite des étapes précédentes.

L'ordre prédéfini de rangement des composants du groupe peut être l'ordre alphanumérique de leurs signatures respectives, ou l'ordre décroissant de leur nombre minimal d'occurrences, les composants ayant le même nombre minimal d'occurrences étant ensuite rangés par ordre alphanumérique.

Il est à noter que ce traitement de normalisation n'est pas nécessaire dans le procédé selon l'invention. L'ordre d'apparition des composants dans le schéma peut en effet être conservé.

L'étape 13 suivante du procédé consiste à générer des automates à états finis 5. Ce traitement consiste à générer pour chaque arbre syntaxique un ensemble d'automates de base, à raison d'un automate par groupe de l'arbre syntaxique, puis à combiner ces automates de base.

Sur la figure 5a, l'automate d'un groupe séquentiel (SEQ) de n éléments de signatures m1, m2, ..., mn, de niveau hiérarchique immédiatement inférieur comprend n+2 états numérotés de 0 à n+1 symbolisés sur la figure par des cercles, chaque noeud étant relié à son successeur par une transition symbolisée par un arc correspondant à un élément du groupe et appelé par la signature de l'élément, la dernière transition F (vers l'état n+1) marquant la fin du groupe.

Sur la figure 5b, l'automate d'un groupe de type alternative (CHO) de n éléments de signatures m1, m2, ..., mn, de niveau hiérarchique immédiatement inférieur comprend un état initial numéroté "0" et n états finaux numérotés de 1 à n, l'état 0 étant relié aux états finaux 1 à n respectivement par n transitions correspondant respectivement aux n éléments du groupe.

Sur la figure 5c, l'automate d'un groupe ET de n éléments de signatures m1, m2, ..., mn, de niveau hiérarchique immédiatement inférieur comprend $1+n+n*(n-1)+n*(n-1)*(n-2)+\cdots+n!$ états représentant toutes les combinaisons possibles des n éléments.

Un tel automate peut être généré par un algorithme simple tel que celui qui suit :

```
E est l'ensemble des composants possibles du groupe
Exécutez Fonction_1 (E, état initial)

Fonction_1 (E, état e) :
    Répétez tant que E n'est pas vide
        Sélectionnez un élément mi de E et le retirez de E
        Créez un état e' et un arc joignant e à e' noté mi
        Dupliquez E en E'
        Exécutez fonction_1(E', état e')
    Fin répétez
```

L'automate d'un groupe ET$_{NO}$ de n éléments de signatures m1, m2, ..., mn, de niveau hiérarchique immédiatement inférieur peut être celui d'un SEQ dès lors que l'on accepte de perdre l'information concernant l'ordre d'apparition des éléments dans le groupe ou qu'il est fixé.

Ces automates (cas des groupes de type CHO, ET et ET$_{NO}$) peuvent être optimisés en appliquant un traitement d'évitement des éléments optionnels, c'est-à-dire dont l'ensemble des occurrences possibles est de la forme (O..k). Cette règle reflète le fait que chaque élément associé à un nombre d'occurrences minimal nul n'est pas forcément codé.

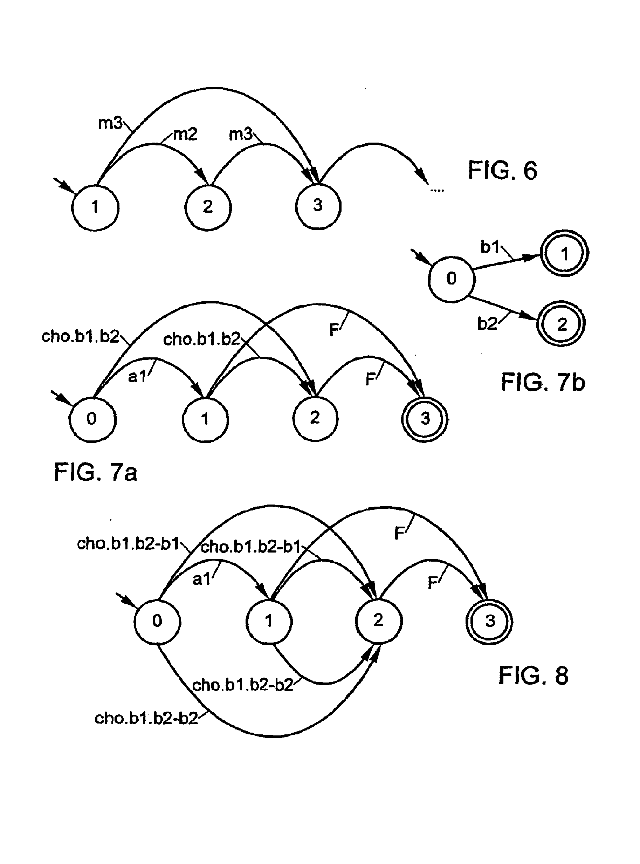

Comme représenté sur la figure 6, ce traitement consiste à rajouter une transition entre l'état "1" situé immédiatement en amont d'un élément optionnel "2" et tous les états "3" immédiatement situés en aval de cet élément, cette nouvelle transition étant associée à la signature "m3" de l'élément correspondant à l'état où elle aboutit.

Si l'un des états situés immédiatement en aval est également associé à un élément optionnel, il faut prévoir également une transition vers tous les états situés immédiatement en aval de cet état.

Ce traitement peut être effectué par l'algorithme suivant :

```
Soit Z le sous-ensemble des nœuds de l'automate dont

l'élément associé a une occurrence minimale nulle.

Répétez (tant que l'automate est modifié par la procédure
suivante) :
    Pour chaque élément X de Z :
        Pour chaque transition entrante TEx de X :
            Pour chaque transition sortante TSx de X :
                1. Créez une nouvelle transition N reliant le nœud
                   source de la transition TEx et le nœud destination de
                   la transition TSx. La transition est marquée par la
                   valeur de l'arc TSx
                2. Si une transition identique n'existe pas déjà dans le
                   graphe, la rajouter au graphe
            Fin pour
        Fin pour
    Fin pour
Fin répétez
```

Il est à noter que les automates ainsi générés pour un schéma de structure sont imbriqués dans les autres. En effet, dans les automates correspondant à l'exemple de schéma représenté sur la figure 2, lorsque le type TC (éléments X et Y) est rencontré dans l'automate correspondant au type TA 31, l'automate correspondant au type TC 43 est entièrement exécuté avant de poursuivre l'exécution de l'automate correspondant au type TA.

L'étape 14 suivante du procédé selon l'invention consiste à réduire et transformer les automates obtenus précédemment.

On peut ainsi fusionner des automates d'un même arbre syntaxique (et non des automates d'arbres différents qui s'appellent les uns les autres) de la manière expliquée en référence avec les figures 7a et 7b.

Ces figures représentent les automates qui ont été générés conformément au procédé selon l'invention à partir de l'élément de structure $(a_1^{0..*},(b_1 \mid b_2)^{0..*})$. Le premier automate (figure 7a) correspond au groupe SEQ (","), tandis que le second automate (figure 7b) correspond au groupe alternatif ("|").

Au cours de l'exécution de ces automates, l'arrivée à l'état 2 dans le premier automate entraîne l'exécution du second l'automate et l'arrivée à l'état final 1 ou 2 dans le second automate est suivi de la poursuite de l'exécution du premier automate, c'est-à-dire de l'exécution de la transition F entre l'état 2 et l'état final 3 du premier automate.

Le traitement de fusion des deux automates permet d'obtenir l'automate représenté sur la figure 8, dans lequel chaque alternative du groupe CHO est représentée par une transition associée à la signature "cho.b1.b2" du groupe, concaténée avec la signature "b1", "b2" de l'élément du groupe figurant dans l'alternative choisie.

Au cours de cette étape 14, les automates peuvent également subir un traitement de minimisation du nombre d'états, par exemple en appliquant l'algorithme de Hopcroft, puis un traitement de normalisation pour obtenir des automates normalisés 6.

A l'issue de ce traitement, les transitions au départ de chaque noeud sont numérotées de 0 à n.

L'étape suivante 15 consiste à relire le document 2 à compresser les données qu'il contient en exécutant les automates sur la structure du document, en vue d'obtenir une succession de séquences binaires dans lesquelles on trouve la valeur compressée de chaque élément ou ensemble d'informations de base du document Selon un premier type de codage, ces séquences binaires sont de la forme $(K.N.V_1..V_N)_e$ pour chaque élément ou groupe d'éléments e, N étant le nombre d'occurrences de l'élément e ou le nombre d'ensembles d'informations successifs correspondant à l'élément e, K étant le numéro de la transition ayant permis d'atteindre l'élément e, et $V_1..V_N$ les valeurs respectives, éventuellement compressées des N occurrences de l'élément e. Si e est un groupe d'éléments, sa valeur V est décomposée en autant de séquences binaires (K.N.V) qu'il contient d'éléments. Toutefois, dans certains cas, N peut être omis, notamment lorsque ce nombre est fixe. Il en est de même de K dans le cas où il n'y a qu'un seul arc en provenance d'un état, par exemple dans un groupe de type séquence.

Au préalable, on peut réaliser un entête général du document compressé qui regroupe plusieurs paramètres codés, utiles à la description du document. Ainsi, un tel entête peut comprendre une signature du ou des schémas de structure utilisés, et un ensemble de paramètres décrivant le codage utilisé, comme par exemple :

- un paramètre indiquant si le codage de la longueur de chaque élément est obligatoire ou optionnel ou non présent dans le document,
- un paramètre indiquant si les éléments peuvent ou non être sous-typés, c'est-à-dire associés à un type plus précis que leur type de base, et
- un paramètre indiquant le type de codage utilisé pour le nombre d'occurrences.

Chaque élément d'information du document peut également être associé à un entête, sa présence et sa nature étant précisés dans l'entête du document.

L'entête d'un élément peut ainsi comprendre la longueur codée de celui-ci, de manière à permettre, lors de la décompression du document, l'accès à un élément particulier sans décompresser tous les éléments précédents dans le document. Les entêtes d'éléments sont insérés dans le document par exemple juste avant le codage de la valeur des éléments.

D'une manière générale, la compression du document consiste à lire séquentiellement le document, en exécutant les automates du schéma, ce qui permet en outre de vérifier que la structure du document correspond au schéma compilé.

Au cours de ce traitement, on code le nombre d'occurrences de chaque élément apparaissant dans le document. A cet effet, on applique les règles suivantes.

Dans le cas où le nombre d'occurrences d'un élément e est défini par (i..j), on distingue les cas suivants :

Si j est différent de "*" et i est différent de 0, le codage est décomposé en deux parties, à savoir (i..i) et (0..j-i), la première partie n'est pas codée car cette formulation spécifie que i occurrences sont nécessaires. La seconde partie est codée sur $|log_2(j-i+1)|$ bits.

Si j est différent de "*" et i est égal à 0, le codage du nombre d'occurrences est effectué entre 1 et j, soit sur $|log_2(j)|$ bits, car si ce codage est nécessaire, cela signifie qu'il y a au moins un élément e dans le document.

Si j est égal à "*", on utilise une technique de codage telle que ASN1 selon laquelle le premier octet indique sur combien d'octets le codage est effectué, et les octets suivants contiennent la valeur du nombre d'occurrences. On peut aussi utiliser le bit de poids fort de chaque octet pour indiquer s'il est ou non le dernier octet de codage du nombre d'occurrences, les sept bits suivants de chaque octet servant à coder le nombre d'occurrences.

Alternativement, on peut choisir un autre type de codage dans lequel il n'est pas nécessaire d'introduire le nombre d'occurrences des éléments d'un schéma de structure. Selon ce type de codage, on introduit un type appelé "échappement" ou "esc" qui indique l'état final des automates. Il est donc nécessaire d'appliquer au préalable une transformation aux automates obtenus précédemment.

Cette transformation consiste à ajouter à chaque état des automates une transition de retour vers l'état précédent et ajouter une transition "esc" vers un état final, marquant la fin de l'exécution de l'automate. Le codage des éléments n'est alors plus que de la forme (KV), le codage d'un automate se terminant par le numéro $K_{esc}$ de la transition "esc".

En fait, ce type de codage n'est intéressant que pour le codage de formes complexes et pour des éléments n'ayant pas de nombre d'occurrences maximal. Il est en particulier tout à fait adapté au codage de groupes de type alternatif comprenant un nombre d'éléments différent de $2^p$, p étant un nombre entier.

Ce type de codage peut être combiné avec le précédent. Il suffit alors pour cela, de l'indiquer dans l'entête du document compressé et d'attribuer un bit aux endroits du codage où doivent se trouver un nombre d'occurrences.

Selon l'invention, au moins un type de base des ensembles d'informations du document est associé à un module externe de compression 16. De cette manière, lors de la lecture du document, les types respectifs des ensembles d'informations rencontrés sont analysés, et lorsqu'un type d'ensemble d'informations est associé à un module externe de compression 16, celui-ci est appliqué au contenu de l'ensemble d'information et le résultat de la compression inséré dans le document compressé en tant que valeur de l'ensemble de d'information correspondant.

Les modules externes de compression peuvent par exemple appliquer la norme "mp3" pour les informations sonores, "jpeg" pour les images et "MPEG 1" ou "MPEG 2" pour les données de type vidéo.

Si aucun module de compression n'est associé à un type d'ensemble d'informations, on peut utiliser un module de compression par défaut ou récupérer les ensembles d'informations ayant ce type tels qu'ils apparaissent dans le document initial.

Si dans l'entête du document, il est indiqué que le codage de la longueur est optionnel ou obligatoire, les éléments sont associés à un entête dans le document compressé, contenant la longueur en nombre de bits de la valeur de l'élément. Cette particularité permet un accès direct à un élément du document compressé sans avoir à décompresser les éléments situés avant dans le document, en lisant à l'aide des automates uniquement les longueurs respectives de ces éléments jusqu'à l'élément recherché.

La longueur des éléments peut être codée de la manière suivante.

Dans le cas où dans l'entête du document, il est indiqué que le codage de la longueur des éléments est obligatoire, la longueur L des éléments en nombre de bits est calculée à l'aide la formule suivante :

$$L = 8*p+h \tag{4}$$

où p représente le nombre d'octets (en codage ASN1 ou utilisant les bits de poids fort de chaque octet utilisé pour coder ce nombre) utilisés pour coder la longueur de l'élément, et h représente le nombre de bits restants de cette longueur (h < 8).

Il est à noter que le module externe de compression 16 qui est appelé pour effectuer le codage de la valeur d'un élément peut fournir en retour cette longueur.

Dans le cas où le codage de la longueur des éléments n'est pas obligatoire, la valeur du premier bit correspondant à la valeur de l'élément indique si les bits suivants représentent ou non la longueur de l'élément.

Si les éléments peuvent être sous-typés (indiqué dans l'entête du document), les nouveaux types éventuels sont insérés dans un entête d'élément placé dans le document compressé juste avant la valeur de l'élément. Le premier bit indique si le type de l'élément est différent ou non du type attendu. Dans le premier cas, les bits suivants dans l'entête de l'élément contiennent le code du nouveau type, ce code étant déterminé en numérotant tous les sous-types possibles du type de base de l'élément, cette numérotation étant donnée par le codage de la structure du document.

D'une manière plus précise, le codage d'un document est effectué en trois étapes principales.

A la première étape, on numérote les arcs sortants de chaque noeud. Cette étape est facultative s'il n'y a qu'un seul arc au départ du noeud. S'il y a n arcs sortants, on associe à chacun de ces arcs un numéro donné par l'ordre des arcs attribué lors de la normalisation (étape 14). Ce numéro est codé sur n' bits, n' étant tel que $2^{n'-1} < n \leq 2^{n'}$.

Ainsi, si n transitions sont issues de l'état E, chaque transition sera codée sur $|\log_2(n-1)|+1$ bits.

A la seconde étape, on code le nombre d'occurrences de chaque sous-automate comme décrit ci-avant.

A la troisième étape, on code le sous-automate. Ce traitement peut être formulé par l'algorithme suivant :

```
Se placer en début d'automate,
Tant que l'état actif n'est pas final
    On code l'arc que l'on traverse, s'il y a lieu
    On code le nombre n d'occurrences s'il y a lieu
    On se déplace dans le sous-automate correspondant
        au nœud atteint,
    On code n fois ce sous automate.
    On se replace dans l'automate initial.
Fin tant que.
```

Par exemple, pour le codage de l'occurrence "$a_2\, a_3\, a_1\, a_1\, a_3$" de l'automate $(a_1 \mid a_2 \mid a_3)^{(0..*)}$, il y a trois arcs sortants. La numérotation des arcs est donc effectuée sur deux bits. Par conséquent, le résultat du codage est le suivant dans le cas où l'on code le nombre d'occurrences :

0000 0101 01 $V_{a2}$ 10 $V_{a3}$ 00 $V_{a1}$ 00 $V_{a1}$ 10 $V_{a3}$

dans lequel "0000 0101" représente la valeur binaire du nombre d'occurrences soit 5, et $V_{a1}$, $V_{a2}$ et $V_{a3}$ sont respectivement les valeurs des occurrences de a1, a2 et a3.

Dans le cas où l'on ne code pas le nombre d'occurrences :

01 $V_{a2}$ 10 $V_{a3}$ 00 $V_{a1}$ 00 $V_{a1}$ 10 $V_{a3}$ 11

11 correspondant au numéro de la transition de sortie "esc".

Dans l'exemple des figures 7a, 7b, le codage de l'occurrence "$b_2\, b_1\, a_1$" de l'automate $(a_1^{0..*}, (b_1 \mid b_2)^{0..*})$ aboutit au résultat suivant (cas où les états ne sont pas fusionnés) :

00000010     nombre d'occurrences de la séquence (ici 2 fois)

| | |
|---|---|
| 1 | codage de l'arc "cho.$b_1.b_2$" |
| 0000 0010 | nombre d'occurrences du groupe "cho.b1.b2" (ici 2 fois). |
| 1 | codage de l'arc $b_2$ dans le groupe "cho.b1.b2" |
| $V_{b2}$ | codage de la valeur de $b_2$. |
| 0 | codage de l'arc $b_1$ dans le groupe "cho.b1.b2" |
| $V_{b1}$ | codage de la valeur de $b_1$. |
| 0 | codage de l'arc $a_1$ |
| 00000001 | nombre d'occurrences de $a_1$ |
| $V_{a1}$ | codage de la valeur de $a_1$. |
| 1 | codage de l'arc de sortie F |

Dans le cas où les états sont fusionnés (figure 8) :

| | |
|---|---|
| 0000 0010 | nombre d'occurrences de la séquence |
| 10 | codage de l'arc "cho.$b_1.b_2$ - $b_2$" |
| 00000010 | nombre d'occurrences du groupe "cho.b1.b2" |
| $V_{b2}$ | codage de la valeur de $b_2$. |
| 0 | codage de l'arc $b_1$ dans le groupe "cho.b1.b2" |
| $V_{b1}$ | codage de la valeur de $b_1$. |
| 00 | codage de l'arc $a_1$ |
| 00000001 | nombre d'occurrences de $a_1$. |
| $V_{a1}$ | codage de la valeur de $a_1$. |
| 10 | codage de l'arc de sortie F |

Il peut être nécessaire d'effectuer un ré-ordonnancement de l'automate, notamment si le schéma a été interprété et réordonné de manière à optimiser le codage dans le cas du groupe $ET_{NO}$.
Si l'ordre des attributs n'est pas utile (comme dans le langage XML), on peut effectuer un codage qui réordonne les attributs des éléments dans un ordre prédéterminé, par exemple suivant un ordre alphanumérique, puis suivant le fait qu'ils sont requis ou non. Cette disposition permet de réduire d'autant la taille de la description compressée.

Le traitement de décompression d'un document ainsi obtenu est effectué en exécutant lés étapes 11 à 15 sur le schéma de structure du document pour obtenir les automates, puis en exécutant l'étape 15' de décodage ou de décompression du document, cette étape consistant à parcourir le document compressé en exécutant les automates obtenus à la suite des étapes 11 à 14, de manière à pouvoir déterminer le type et le nom des éléments d'information compressés rencontrés dans le document. Les valeurs des éléments qui ont été obtenues à l'aide de modules 16 de compression externes sont décompressées à l'aide de modules de décompression 16' correspondants.

Il est à noter que si l'on doit traiter (compresser ou décompresser) plusieurs documents ayant le même schéma de structure, les étapes 11 à 15 ne sont exécutées qu'une seule fois, seules les étapes 15 et 16 (ou 15' et 16') devant être appliquées à chaque document à traiter.

## Revendications

**1.** Procédé pour la compression et décompression d'un document structuré, associé à au moins un schéma de structure arborescent (1 ; 31, 39, 43) définissant une structure du document et comprenant des éléments de structure (32, 33, 34, 40, 44, 45, 46, a3, a4, X, Y, a1, a5, a1, a2, A, B) imbriqués, représentant des ensembles d'informations du document, les éléments de structure étant répartis en trois catégories, à savoir des éléments racine structurés (31, 39, 43), des groupes d'éléments (32, 33, 34, 40, 44, 45, 46), et des éléments de base structurés (X, Y, A, B) ou non structurés (a3, a4, a1, a5, a1, a2) correspondant aux éléments de plus bas niveau dans la structure, chaque élément de base étant associé à un type d'information,
**caractérisé en ce qu'**au moins un type d'information des éléments de base est associé au préalable à un algorithme de compression (16) adapté, le procédé comprenant les étapes suivantes :

- l'analyse syntaxique (11) du schéma de structure du document,
- la compilation (13) du schéma de structure en vue d'obtenir un automate à états finis (5) par élément racine, chaque automate comprenant des états ("0", "1", ..., "n") reliés entre eux par des transitions ("m1, "m2", ..., "mn") représentant respectivement les éléments de la structure, et
- la compression (15) du document structuré (2) à compresser comprenant l'exécution des automates à états finis (5) sur le document, et l'exécution de l'algorithme de compression (16) lorsqu'un ensemble d'informations ayant un type d'information associé audit algorithme est rencontré dans le document structuré (2).

2. Procédé selon la revendication 1,
   **caractérisé en ce que**, en vue de la décompression du document compressé (10), il comprend l'exécution des étapes (11, 12, 13) pour déterminer les automates (5) ayant servi à la compression à partir du schéma de structure (1), l'exécution (15') des automates (5) sur le document compressé (10) pour analyser le contenu de celui-ci, en vue de reconstituer un document au format d'origine ayant une structure au moins équivalente, des algorithmes de décompression (16') correspondant aux algorithmes de compression (16) utilisés lors de la compression (15) étant exécutés pour restituer les ensembles d'informations du document structuré (2) d'origine à partir de séquences d'informations binaires repérées dans le document compressé durant l'exécution des automates.

3. Procédé selon la revendication 1 ou 2,
   **caractérisé en ce que** dans le cas où le schéma de structure (1) doit être transmis avec le document, le procédé selon l'invention comprend une étape de transmission du schéma de structure (5).

4. Procédé selon l'une des revendications 1 à 3,
   **caractérisé en ce qu'**il comprend une étape de normalisation (12) du schéma de structure (5) du document de manière à obtenir un ordre unique prédéfini des éléments du schéma.

5. Procédé selon l'une des revendications 1 à 4,
   **caractérisé en ce que** chaque ensemble d'information est repéré dans le document compressé, de manière à permettre l'accès direct à un ensemble d'informations particulier, sans qu'il soit nécessaire de décompresser les ensembles d'informations précédant l'ensemble à décompresser.

6. Procédé selon l'une des revendications 1 à 5,
   **caractérisé en ce que** chaque élément du schéma de structure est en outre associé à un ensemble de nombres d'occurrences possibles, indiquant le nombre de fois qu'un ensemble d'informations ayant cet élément de structure peut apparaître dans l'ensemble d'informations de niveau immédiatement supérieur auquel il appartient.

7. Procédé selon l'une des revendications 1 à 6,
   **caractérisé en ce qu'**il comprend une étape d'optimisation du schéma de structure du document consistant à réduire le nombre de niveaux hiérarchiques de groupes d'éléments de structure.

8. Procédé selon l'une des revendications 1 à 7,
   **caractérisé en ce que** le document compressé (10) comprend pour chaque ensemble d'informations du document d'origine, un numéro de transition correspondant à l'élément de structure associé à l'ensemble d'informations et la valeur binaire de l'ensemble d'informations compressé.

9. Procédé selon la revendication 8,
   **caractérisé en ce que** dans le document compressé (10), chaque élément de structure d'au moins une partie des éléments de structure du schéma de structure est associé à un nombre d'occurrences d'ensembles d'informations dans le document.

10. Procédé selon la revendication 8 ou 9,
    **caractérisé en ce que** dans le document compressé (10), la fin d'un groupe de plusieurs occurrences d'ensembles d'informations de même type est marquée par une séquence binaire représentant un numéro de transition vers un état final.

**Patentansprüche**

1. Verfahren zur Komprimierung und Dekomprimierung eines strukturierten Dokuments, das wenigstens einem baumartig verzweigten Strukturschema (1; 31, 39,43) zugeordnet ist, welches eine Struktur des Dokuments definiert und verschachtelte Strukturelemente (32, 33, 34, 40, 44, 45, 46, a3, a4, X, Y, a1, a5, a1, a2, A, B) aufweist, die Informationseinheiten des Dokuments repräsentieren, wobei die Strukturelemente in drei Kategorien unterteilt sind, nämlich strukturierte Stammelemente (31, 39, 43), Elementgruppen (32, 33, 34, 40, 44, 45, 46) und strukturierte (X, Y, A, B) oder nicht-strukturierte (a3, a4, a1, a5, a1, a2) Basiselemente, die den Elementen auf dem untersten Niveau in der Struktur entsprechen, wobei jedes Basiselement einem Informationstyp zugeordnet ist,

**dadurch gekennzeichnet, dass** wenigstens ein Informationstyp der Basiselemente zuvor einem angepassten Komprimierungsalgorithmus (16) zugeordnet wird, wobei das Verfahren die folgenden Schritte aufweist:

- syntaktische Analyse (11) des Strukturschemas des Dokuments,
- die Compilierung (13) des Strukturschemas im Hinblick darauf, einen Automaten mit endlicher Anzahl von Zuständen (5) pro Stammelement zu erhalten, wobei jeder Automat die Zustände ("0", "1" ...; "n") aufweist, die untereinander durch Übergänge ("m1", "m2", ...; "mn") verbunden sind, welche jeweils die Elemente der Struktur repräsentieren, und
- die Komprimierung (15) des zu komprimierenden strukturierten Dokuments (2), welche die Ausführung der Automaten mit endlicher Anzahl von Zuständen (5) an dem Dokument und die Ausführung des Komprimierungsalgorithmus (16) umfasst, wenn die Informationseinheit mit einem dem Algorithmus zugeordneten Informationstyp in dem strukturierten Dokument (2) aufgefunden wird.

2. Verfahren nach Anspruch 1,
   **dadurch gekennzeichnet, dass** im Hinblick auf die Dekomprimierung des komprimierten Dokuments (10) dieses umfasst die Ausführung von Schritten (11, 12, 13) aus dem Strukturschema (1), um die Automaten (5) zu bestimmen, die der Komprimierung ausgesetzt waren, die Ausführung (15') von Automaten (5) an dem komprimierten Dokument (10), um den Inhalt desselben zu analysieren, um ein Dokument wieder im Ursprungsformat mit einer wenigstens äquivalenten Struktur herzustellen, wobei die Dekomprimierungsalgorithmen (16'), die den bei der Komprimierung (15) verwendeten Komprimierungsalgorithmen (16) entsprechen, ausgeführt werden, um die Informationseinheiten des strukturierten Ursprungsdokuments (2) aus binären Infonnationssequenzen wieder herzustellen, die in dem komprimierten Dokument während der Ausführung der Automaten aufgefunden wurden.

3. Verfahren nach Anspruch 1 oder 2,
   **dadurch gekennzeichnet, dass** in dem Falle, in welchem das Strukturschema (1) mit dem Dokument übertragen werden muss, das Verfahren gemäß der Erfindung einen Schritt zur Übertragung des Strukturschemas (5) umfasst.

4. Verfahren nach einem der Ansprüche 1 bis 3,
   **dadurch gekennzeichnet, dass** dieses einen Schritt zur Normierung (12) des Strukturschemas (5) des Dokuments aufweist, sodass eine vordefinierte Einzelfolge von Elementen des Schemas erhalten wird.

5. Verfahren nach einem der Ansprüche 1 bis 4,
   **dadurch gekennzeichnet, dass** jede Informationseinheit in dem komprimierten Dokument aufgefunden wird, sodass ein direkter Zugriff auf eine spezielle Informationseinheit erlaubt wird, ohne dass es notwendig wird, die der zu dekomprimierenden Einheit voraus gehenden Informationseinheiten zu dekomprimieren.

6. Verfahren nach einem der Ansprüche 1 bis 5,
   **dadurch gekennzeichnet, dass** jedes Element des Strukturschemas ferner einer Zahlengruppe über mögliche Auftrittshäufigkeiten zugeordnet ist, welche die Häufigkeitszahl angibt, mit der eine Informationseinheit mit diesem Strukturelement in der Informationseinheit an einer Stelle unmittelbar über derjenigen, zu der es gehört, auftauchen kann.

7. Verfahren nach einem der Ansprüche 1 bis 6,
   **dadurch gekennzeichnet, dass** es einen Schritt zur Optimierung des Strukturschemas des Dokuments umfasst, bestehend darin, die Zahl der hierarchischen Niveaus der Strukturelementgruppen zu reduzieren.

8. Verfahren nach einem Ansprüche 1 bis 7,
   **dadurch gekennzeichnet, dass** das komprimierte Dokument (10) für jede Informationseinheit des Ursprungsdokuments eine Übergangsnummer, die dem der Informationseinheit zugeordneten Strukturelement entspricht, und den binären Wert der komprimierten Informationseinheit umfasst.

9. Verfahren nach Anspruch 8,
   **dadurch gekennzeichnet, dass** in dem komprimierten Dokument (10) jedes Strukturelement aus wenigstens einem Teil der Strukturelemente des Strukturschemas einer Auftrittshäufigkeitszahl der Informationseinheiten in dem Dokument zugeordnet ist.

10. Verfahren nach Anspruch 8 oder 9,
    **dadurch gekennzeichnet, dass** in dem komprimierten Dokument (10) das Ende einer Gruppe von mehreren Auftritten von Informationseinheiten des gleichen Typs durch eine binäre Sequenz markiert wird, die eine Übergangsnummer zu einem Endzustand repräsentiert.

**Claims**

1.  Method for compressing and decompressing a structured document, associated with at least one tree structure schema (1; 31, 39, 43) defining a structure of the document and comprising nested structural elements (32, 33, 34, 40, 44, 45, 46, a3, a4, X, Y, a1, a5, a1, a2, A, B), representing information sets of the document, the structural elements being divided into three categories, namely structured root elements (31, 39, 43), element groups (32, 33, 34, 40, 44, 45, 46), and structured (X, Y, A, B) or non-structured (a3, a4, a1, a5, a1, a2) base elements corresponding to the lowest level elements in the structure, each base element being associated with an information type, **characterised in that** at least one information type of the base elements is first associated with a suitable compression algorithm (16), the method comprising the following steps:

    -   syntactic analysis (11) of the structural schema of the document;

    -   compilation (13) of the structural schema with a view to obtaining a finite state automaton (5) per root element, each automaton comprising states ("0", "1", ..., "n") interconnected by transitions ("m1", "m2", ..., "mn") representing respectively the elements of the structure; and

    -   compression (15) of the structured document (2) to be compressed comprising execution of the finite state automata (5) on the document, and execution of the compression algorithm (16) when an information set having an information type associated with said algorithm is encountered in the structured document (2).

2.  Method according to Claim 1,
    **characterised in that**, with a view to the decompression of the compressed document (10), it comprises execution of the steps (11, 12, 13) in order to determine the automata (5) which were used for the compression from the structural schema (1), execution (15') of the automata (5) on the compressed document (10) in order to analyse the content thereof, with a view to reconstructing a document in the original format having a structure that is at least equivalent, decompression algorithms (16') corresponding to the compression algorithms (16) used during the compression (15) being executed in order to restore the information sets of the original structured document (2) from binary information sequences marked in the compressed document during execution of the automata.

3.  Method according to Claim 1 or 2,
    **characterised in that**, where the structural schema (1) has to be transmitted with the document, the method according to the invention comprises a step of transmitting the structural schema (5).

4.  Method according to one of Claims 1 to 3,
    **characterised in that** it comprises a step (12) of normalising the structural schema (5) of the document so as to obtain a predefined unique order of the elements of the schema.

5.  Method according to one of Claims 1 to 4,
    **characterised in that** each information set is marked in the compressed document, so as to allow direct access to a particular information set without it being necessary to decompress the information sets preceding the set to be decompressed.

6.  Method according to one of Claims 1 to 5,
    **characterised in that** each element of the structural schema is also associated with a set of numbers of possible occurrences, indicating the number of times that an information set having this structural element can appear in the immediately higher level information set to which it belongs.

7.  Method according to one of Claims 1 to 6,
    **characterised in that** it comprises a step of optimising the structural schema of the document consisting of reducing the number of hierarchical levels of structural element groups.

8.  Method according to one of Claims 1 to 7,
    **characterised in that** the compressed document (10) comprises, for each information set of the original document, a transition number corresponding to the structural element associated with the information set and the binary value of the compressed information set.

9. Method according to Claim 8,
   **characterised in that**, in the compressed document (10), each structural element of at least some of the structural elements of the structural schema is associated with a number of occurrences of information sets in the document.

10. Method according to Claim 8 or 9,
    **characterised in that**, in the compressed document (10), the end of a group of several occurrences of information sets of the same type is marked by a binary sequence representing the number of a transition to a final state.

FIG. 1

Schéma ⟋1

Analyse
syntaxique ⟋11

Arbres
syntaxiques ⟍3

Transformation
+
Normalisation ⟍12

Arbres
syntaxiques
normalisés ⟍4

Compilation ⟍13

Automates à
états finis ⟍5

Transformation
+
Normalisation ⟍14

Document
Structuré 2

Automates à
états finis
normalisés 6

Document
binaire ⟍10

Modules de
compression

Codage doc.

Décodage
doc.

Modules de
décompression

⟍16  ⟍15  ⟍15'  ⟍16'

Document
binaire ⟍10

Document
structuré ⟍2'

FIG. 2a

FIG. 2b

FIG. 2c

FIG. 3

FIG. 4a

FIG. 4c

FIG. 5b

FIG. 4b

FIG. 5a

FIG. 5c

FIG. 6

FIG. 7b

FIG. 7a

FIG. 8